# EUROPÄISCHE PATENTSCHRIFT

(11) **EP 0 982 700 B1**
(45) Veröffentlichungstag und Bekanntmachung des Hinweises auf die Patenterteilung: **29.03.2006**
(21) Anmeldenummer: 99115201.8
(22) Anmeldetag: 31.07.1999
(51) Int. Cl.: G08G 1/0968, G08G 1/09, B60R 16/02, H04J 3/02

(54) **Fahrzeugkommunikationssystem**
Vehicle communication system
Système de communication pour véhicule

(30) Priorität: 28.08.1998 DE 19839354
(43) Veröffentlichungstag der Anmeldung: 01.03.2000
(73) Patentinhaber: DaimlerChrysler AG, 70567 Stuttgart (DE)
(72) Erfinder: Dauner, Oskar, 73732 Esslingen (DE); Göbel, Fridjof, 74080 Heilbronn (DE); Schneider, Jutta, Dr., 70839 Gerlingen (DE); Schneider, Sandra, Dr., 70499 Stuttgart (DE)

(56) Entgegenhaltungen:
- US-A- 4 942 571
- US-A- 5 257 190

## Beschreibung

Die Erfindung betrifft ein Fahrzeugkommunikationssystem gemäß dem Oberbegriff des Anspruchs 1.

Es werden in Fahrzeugen bereits vernetzte Systeme mit Hard- und Softwarekomponenten eingesetzt, welche unterschiedliche Funktionen umfassen können. Zur Steuerung dieser Funktionen wird eine zentrale Rechnereinheit verwendet, welche über die notwendige Intelligenz und Steuerprogramme sowie über entsprechende Hardware-Schnittstellen verfügt und damit das Zentrum dieser Kommunikationssysteme darstellt. Die Kommunikationssysteme sind auf die zentrale Rechnereinheit fixiert, welche alle Kommunikationsfunktionen überwacht und den Ablauf von Programmen ermöglicht, beispielsweise den Ablauf von Telematikdiensten wie automatischer Notruf, dynamische Zielführung usw.

In der US 4942571 wird eine Multiplex-Steuerung zum Schalten, Steuern und Überwachen elektrischer Endeinrichtungen im Fahrzeug beschrieben, die aus mehreren an eine Busleitung angekoppelten Busteilnehmerstationen besteht. Den Busteilnehmerstationen sind über Signalleitungen sternförmig Schnittstelleneinrichtungen zugeordnet und den Schnittstelleneinrichtungen sind gruppenweise die Endeinrichtungen zugeordnet.

So offenbart die DE 196 25 002 Al ein Fahrzeugkommunikationssystem mit einem Zentralrechner zur Durchführung von Telematikapplikationen wie Flottenmanagement, Routenplanung, Ferndiagnose, Diebstahlschutz usw., mit Geräteeinheiten zum Senden, Empfangen und/oder Verarbeiten von zu den Telematikapplikationen gehörigen Daten und einem oder mehreren Datenübertragungskanälen mit zugehörigen Hardware-Schnittstellen, über welche die Geräteeinheiten mit dem zentralen Fahrzeugrechner verbindbar sind, wobei die Geräteeinheiten den verschiedenen Telematikapplikationen flexibel steuerbar zugeordnet werden. Zur Durchführung der Telematikapplikationen wählt eine adaptive Applikationssteuerung die jeweils erforderlichen Geräteeinheiten applikationsbezogen aus und steuert die erforderlichen Datenübertragungsvorgänge und übernimmt das Ressourcen-, Bedien- und Prioritätenmanagement.

Als nachteilig könnte bei diesem Kommunikationssystem angesehen werden, daß ein modularer Systemaufbau nur durch entsprechende bzw. verschiedene Hardware-Schnittstellen am Zentralrechner realisiert werden und daß bei Geräteeinheiten mit mehreren ausführbaren Funktionen in der Hardware-Schnittstelle vom Zentralrechner ein aufwendiges Protokoll durchgeführt werden muß.

Die DE 42 18 804 A1 offenbart eine Einrichtung zur Darstellung, Aufbereitung und Speicherung von Informationen in einem Kraftfahrzeug mit einem Zentralrechner, einem Massenspeicher zur nichtflüchtigen Speicherung von Programmen und Daten, Hardware-Schnittstellen zur Aufnahme von Informationen, eine Bedieneinheit, eine Anzeigeeinheit und ein Betriebssystem, welches den Ablauf weiterer an die jeweilige Anwendung angepaßter Programme gestattet.

Als nachteilig kann bei diesem System angesehen werden, daß die einzelnen Funktionen nicht von allen Bedienplätzen aus bedient werden können. Zudem wird nicht beschrieben, wie das System erweitert werden kann und wie Funktionsänderungen durchgeführt werden können.

Aufgabe der Erfindung ist es, ein gattungsgemäßes Kommunikationssystem derart weiterzubilden, daß es mit verhältnismäßig geringem Aufwand erweitert und an neue Aufgaben und Applikationen angepaßt werden kann.

Diese Aufgabe wird erfindungsgemäß durch die Merkmale des Anspruchs 1 gelöst. Die Unteransprüche kennzeichnen vorteilhafte Aus- und/oder Weiterbildungen.

Der Hauptgedanke der Erfindung besteht darin, daß den Applikationen flexibel steuerbare Funktionen zugeordnet werden, wobei jeder Funktion jeweils eine Softwareschnittstelle zum Datenaustausch mit anderen Softwareschnittstellen und/oder Hardware-schnittstellen zugeordnet ist, und wobei die Funktionen innerhalb beliebiger Geräteeinheiten ausgeführt werden. Der Ablauf einer einzelnen Funktion erfolgt aber immer innerhalb einer einzigen Geräteeinheit und ist nicht auf mehrere Geräteeinheiten verteilt. Beim Ausführen einer Applikation werden also nicht die verschiedenen Geräteeinheiten angesprochen, sondern die Funktionen, welche zur Ausführung der Applikation benötigt werden und welche beliebig auf die vorhandenen Geräteeinheiten innerhalb des Kommunikationssystems im Fahrzeug verteilt werden können, wobei die Verteilung der Funktionen auf die verschiedenen Geräteeinheiten jederzeit einfach geändert werden kann. Eine ausführbare Funktion im Sinne der Erfindung kann innerhalb einer Geräteeinheit hardwaremäßig, beispielsweise durch eine elektronische Schaltung, und/oder softwaremäßig, beispielsweise als ein auf einem Prozessor ablaufendes Programm, realisiert werden.

Die Aufgabe der den Funktionen zugeordneten Software-Schnittstellen besteht darin, die Daten von anderen Software-Schnittstellen und/oder der Hardware-Schnittstelle in Eingabeparameter für die anzusteuernde Funktion und/oder die Ausgabeparameter der angesteuerten Funktion in Daten für die anderen Software-Schnittstellen und/oder die Hardware-Schnittstelle umzuwandeln, wobei die Hardware-Schnittstelle die Anpassung der internen Daten der Geräteeinheiten an das Datenformat des verwendeten gemeinsamen Datenbusses und umgekehrt durchführt, wobei der gemeinsame Datenbus auch mehrere verbundene Datenbusse mit gleichem Protokoll in beliebiger Topologie (z. B. Ring, Doppelring oder Stern) umfassen kann.

Durch die erfindungsgemäße Einführung von zusätzlichen Software-Schnittstellen können die Hardwareschnittstellen einheitlich aufgebaut werden, wodurch für den gemeinsamen Datenbus ein einheitliches Übertragungsprotokoll durchgeführt werden kann. Die Geräteeinheiten verfügen jeweils nur über eine Hardware-Schnittstelle zum gemeinsamen Datenbus, welche als Gateway zwischen der jeweiligen Geräteeinheit und dem gemeinsamen Datenbus fungieren. Bei Verwendung eines optischen Datenbusses übernimmt die Hardware-Schnittstelle beispielsweise die Umwandlung von optischen in elektrische Signale und noch bestimmte Zusatzaufgaben wie die Durchführung eines Übertragungsprotokolls. Die Hauptarbeit leisten die Software-Schnittstellen, die abhängig von den ihnen zugeordneten Funktionen programmiert werden können. Werden innerhalb einer Geräteeinheit beispielsweise fünf Funktionen ausgeführt, so verfügt die Geräteeinheit über eine Hardware-Schnittstelle und fünf Software-Schnittstellen.

Durch die Zuordnung von jeweils einer Software-Schnittstelle zu jeweils einer ausführbaren Funktion wird in vorteilhafter Weise eine Modularität auf funktionaler Ebene erreicht und die verschiedenen ausführbaren Funktionen können über die Software-Schnittstellen in beliebigen Geräteeinheiten und somit an einem beliebigen Platz innerhalb des Kommunikationssystems angeordnet und von allen Systemteilnehmern genutzt werden. Wird die Funktionalität einer Geräteeinheit durch Software- und/oder Hardwaremaßnahmen verändert, so bleibt die Hardware-Schnittstelle der entsprechenden Geräteeinheit unverändert, es müssen nur die Software-Schnittstellen an den neuen Funktionsumfang angepaßt werden. Die Software-Schnittstellen können als eigenes Programm, welches in Festspeicherbausteinen abgelegt ist, oder wenn die Funktion selbst als Software realisiert ist, als Unterprogramm dieser Software realisiert werden. Somit ist das Kommunikationssystem beliebig erweiterbar, da alle Funktionen, gleichgültig ob sie mittels Hardware oder mittels Programmen realisiert werden, nachträglich installierbar sind und räumlich im Fahrzeug beliebig angeordnet werden können. Ebenso können die Geräteeinheiten untereinander ausgetauscht oder gegen neue Geräteeinheiten mit größerem Funktionsumfang (z. B. neue Displaygeneration, Speichererweiterung etc.) ausgetauscht werden. Die Software-Schnittstellen sind dabei transparent aufgebaut, d. h. alle Eingabeparameter und/oder Ausgabeparameter der Funktionen sowie die von der Hardware-Schnittstelle gelieferten bzw. benötigten Daten sind bekannt.

Durch den erfindungsgemäßen Aufbau des Kommunikationssystems können in vorteilhafter Weise die unterschiedlichen Applikationen von allen als Bedienplatz (Mensch-Maschinen-Schnittstelle) ausgeführten Geräteeinheiten bedient werden, wobei die verschiedenen Bedienplätze unterschiedlich ausgestattet sein können, beispielsweise mit einem großen oder kleinen Display, verschiedene Tastaturen usw.. Desweiteren ist auch die Anzahl von Bedienplätzen nicht festgelegt, es können mehrere Bedienplätze mit gleicher und/oder unterschiedlicher Ausstattung vorgesehen sein.

Der gleichzeitige Zugriff von mehr als einem Bedienplatz auf eine Quelle kann nur mit Hilfe eines Prioritätenmanagements geregelt werden. Das Prioritätenmanagement regelt, welcher Bedienplatz Priorität beim Zugriff auf die Quelle hat, es kann aber auch für einen Bedienplatz den Zugriff auf eine Quelle verbieten oder nur ein Mithören einer bereits belegten Quelle zulassen. Hierbei sind alle Variationen denkbar. Das Prioritätenmanagement regelt auch die Priorität der Darstellung von Applikationen an einem Bedienplatz, d.h. welche Applikation gerade angezeigt wird, so kann beispielsweise ein Telephonanruf sofort angezeigt werden. Zusätzlich ist es vorstellbar, daß ein bestimmter Bedienplatz als Superuser ausgeführt wird, d. h. dieser Bedienplatz erhält die höchste Priorität und hat somit immer Zugriff auf alle Quellen. Das Prioritätenmanagement ist dabei frei konfigurierbar und kann beispielsweise vom Benutzer oder einer bestimmten Servicestelle konfiguriert werden.

Durch die bereits beschriebene funktionale Modularität können in vorteilhafter Weise die Aufgaben im System verteilt werden. Systemaufgaben wie beispielsweise das Prioritätenmanagement, ein Ressourcenmanagement zur Verwaltung von Quellen-Senken-Beziehungen und zur Meldung von Überlastzuständen an das Prioritätenmanagement, oder ein Bedienmanagement zur Erzeugung von Kommandos und Datenströmen aufgrund von Benutzeraktionen, sowie die Darstellung von Funktionen müssen nicht in einer einzigen Geräteeinheit wie beispielsweise in einer als PC oder Hauptrechner ausgeführten Geräteeinheit abgelegt sein, sondern können in beliebigen anderen Geräteeinheiten, beispielsweise in den Bedienplätzen, untergebracht werden. Außerdem sind alle Funktionen im Kommunikationssystem für alle Applikationen verfügbar. So ist beispielsweise das Ortungssignal nicht nur für die Applikation 'Routenberechnung' sondern auch für die Applikation 'Diebstahlschutz' nutzbar.

Durch den beschriebenen Aufbau des erfindungsgemäßen Kommunikationssystems können geänderte oder zusätzliche Funktionen in Form von Programmen und/oder Geräteeinheiten jederzeit nachträglich vom Kunden und/oder von einer geeigneten Servicestelle in das Kommunikationssystem integriert werden. Dies gilt beispielsweise auch für neue Telematikdienste. Zudem ist eine nachträgliche Speichererweiterung oder eine Änderung des Betriebssystems jederzeit möglich.

Als weiterer Vorteil des erfindungsgemäßen Kommunikationssystems ergibt sich, daß ein Sicherheits- und/oder Firewall-Konzept verteilt und mehrstufig realisierbar ist, wobei beispielsweise in jeder als Gateway zu anderen Bussystemen ausgeführten Geräteeinheit oder in jeder anderen im Kommunikationssystem vorhandenen Geräteeinheit von der aus ein Zugriff auf das Kommunikationssystem erfolgen kann, bestimmte Sicherheitsfunktionen (Filter) untergebracht sind.

Außerdem können alle ausführbaren Funktionen im Rahmen der physikalischen Randbedingungen in beliebiger Zahl im System vorhanden sein, beispielsweise können mehrere CD-Spieler zur Verwendung von Audio-CDs und/oder CD-Roms vorgesehen sein.

Als weiterer Vorteil des beschriebenen Kommunikationssystems ergibt sich, daß die Entwicklung von neuen Kommunikations-und/oder Telematikfunktionen von der Fahrzeugentwicklung entkoppelt werden kann, da im Fahrzeug nur Platz für den gemeinsamen Datenbus und für mehrere Geräteeinheiten vorgesehen werden muß.

Durch die Mehrplatzfähigkeit ist es zudem möglich, daß gleichzeitig unterschiedliche optische und/oder akustische Darstellungen einer Applikation an den Bedienplätzen möglich ist. So besteht die Ausgabe bei der automatischen Zielführung durch die Anzeigeeinheit des Fahrerbedienplatzes beispielsweise aus einer symbolischen Pfeildarstellung mit zusätzlicher Sprachausgabe, während die Anzeigeeinheit auf dem Beifahrerbedienplatz eine Übersichtskarte darstellt.

Bevorzugte Ausführungsformen der Erfindung sind in den Zeichnungen dargestellt und werden nachfolgend beschrieben. Hierbei zeigen:
- Fig. 1: eine schematische Übersicht über die wesentlichen Bestandteile eines Fahrzeugkommunikationssytems;
- Fig. 2: schematische Darstellung einer Applikation;
- Fig. 3: schematische Darstellung einer auf das Fahrzeugkommunikationssystem verteilten Applikation;

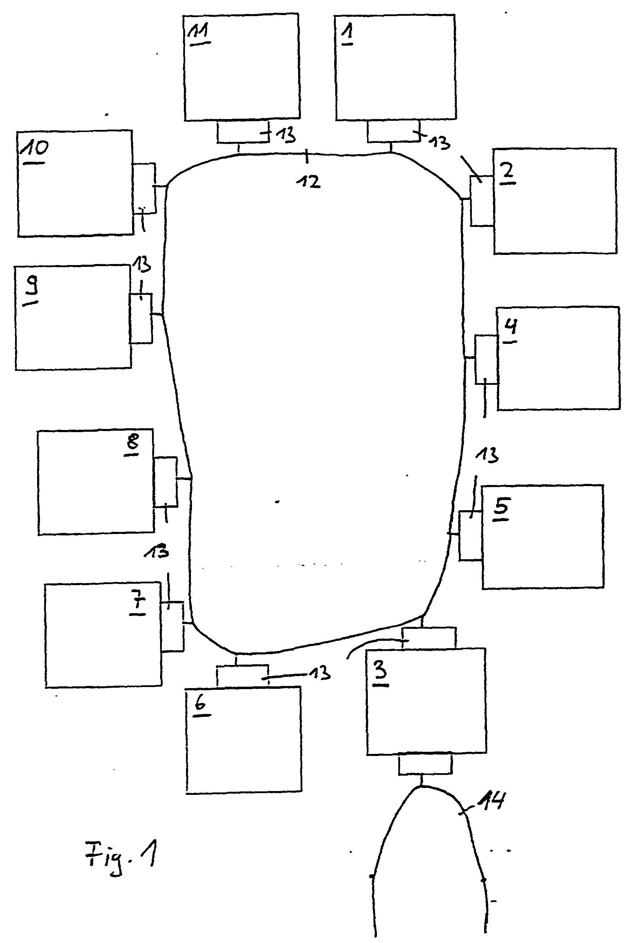

Wie aus Fig. 1 ersichtlich ist, umfaßt das Fahrzeugkommunikationssystem eine Rechnergeräteeinheit 1 mit frei verfügbarem Speicher und einem Standardbetriebssytem, eine Navigationsgeräteeinheit 2, eine als Gateway 3 ausgeführte Geräteeinheit zur Anbindung an andere Fahrzeugbussysteme 14, beispielsweise an den CAN-Bus, eine Geräteeinheit Soundsystem 4, welche zur Ansteuerung von Lautsprechersystemen zur platzindividuellen Beschallung, zur Geräuschunterdrückung und zum Mischen, Verzerren von Signalen dient, einen Tuner 5 oder andere Quellen zum Empfang von Radio-/Fernsehsignalen sowie anderen Audio- und/oder Videoinformationen, eine weitere Geräteeinheit 6, welche als CD-Spieler (compact disk) und/oder DVD (digital versatile disk) und/oder CC (compact cassette) ausgeführt ist und zur Aufbereitung von Audio und/oder Videosignalen von Datenträgern benötigt wird, eine als Kundenschnittstelle 7 ausgeführte Geräteeinheit zum Anschluß von PDAs, Fax, Drucker, Spiele, Video, Kopfhörer, Mikrophon usw., wobei unterschiedliche Schnittstellen wie beispielsweise eine Infrarotschnittstelle, eine serielle Schnittstelle, eine PC-Card-Schnittstelle vorgesehen sein können, eine Geräteeinheit für die Mobilkommunikation 8 für die alle verschiedenen Standards, wie beispielsweise GSM, AMPS, Docomo usw. vorstellbar sind, mehrere Bedienplätze, von welchen beispielhaft ein Bedienplatz 9 dargestellt ist, mit optischen und/oder akustischen Anzeigeeinheiten, Eingabeeinheiten, beispielsweise Tastaturen, Bedieneinrichtungen am Lenkrad, Pointing-Devices wie Computer-Mäuse, Trackballs etc., Touchpad, Touchscreen, Tasten und alle erdenklichen anderen Ein- und Ausgabemöglichkeiten wie Mikrophone und Kopfhörer, eine als Sprachbediensystem 10 ausgeführte Geräteeinheit zur Sprachein- und Sprachausgabe, sowie zur Sprachaufzeichnung und-zur Sprachsteuerung von Fahrzeugfunktionen, eine Geräteeinheit Ortung 11, welche die Standortdaten ermittelt und beliebig aufbereitet zur Verfügung stellt, wobei die Geräteeinheit Ortung 11 neben einem GPS-Empfänger noch weitere Sensoreinrichtungen zur Positionsfeststellung, beispielsweise einen Gyro, umfaßt. Die genannten Geräteeinheiten sind über jeweils eine einheitlich aufgebaute Hardware-Schnittstelle 13 mit einem gemeinsamen Datenbus 12 verbunden.

Das Kommunikationssystem wird zur Ausführung von Applikationen, Funktionen und Diensten verwendet, wobei eine Applikation eine Leistung erbringt, von der ein Benutzer direkt einen Nutzen hat.

Ein Applikation umfaßt dabei mindestens eine Funktion, welche das Erbringen der Leistung für den Benutzer ermöglicht. Eine Applikation kann aber auch hierarchisch aus mehreren Unterapplikationen aufgebaut sein, welche wiederum mindestens eine Funktion umfassen.

Eine Funktion erbringt eine Leistung, die Teil eines Ganzen, beispielsweise einer Applikation ist, wobei eine einzelne Funktion innerhalb einer einzigen Geräteeinheit ausgeführt wird. Die meisten Funktionen sind nicht direkt für den Kunden sichtbar.

Ein Dienst ist eine spezielle Applikation, deren einzelne Funktionen nicht nur in Geräteeinheiten innerhalb des Fahrzeugs ausgeführt werden, sondern auch in außerhalb des Fahrzeugs befindlichen Geräteeinheiten, welche beispielsweise Teil einer Dienstezentrale sind.

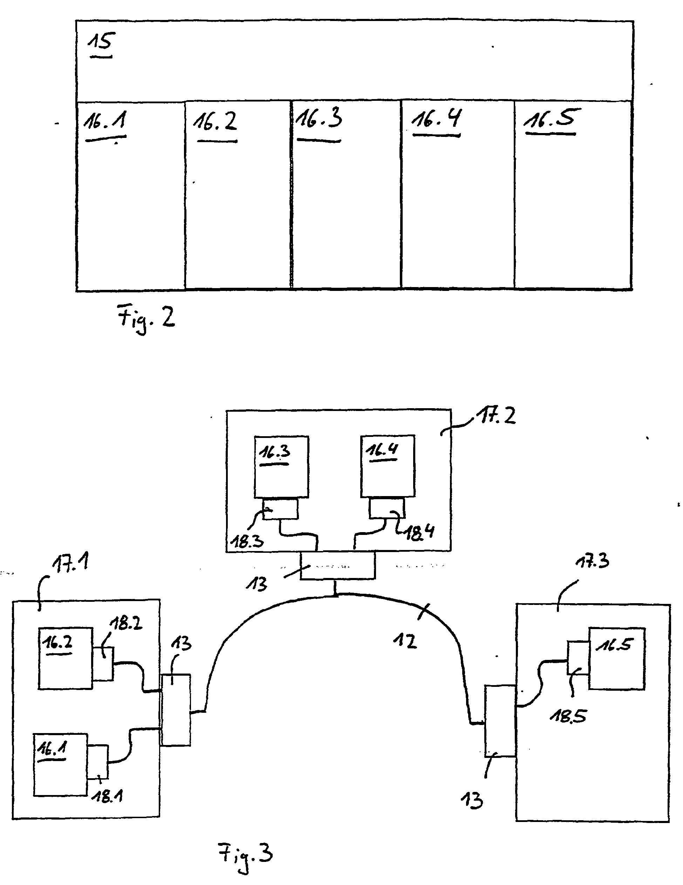

Wie aus Fig. 2 ersichtlich ist, umfaßt eine beispielhaft dargestellte Applikation 15, welche beispielsweise die Bedienung eines Audio-Systems, eines Telefons, einer Klimaanlage, eines Navigationssystems, usw. betrifft, mehrere Funktionen 16.1 bis 16.5, wobei die Funktionen 16.1 bis 16.5, wie aus Fig. 3 ersichtlich ist, innerhalb verschiedener Geräteeinheiten 17.1, 17.2, 17.3 ausgeführt werden, und wobei die Geräteeinheiten 17.1, 17.2, 17.3 über jeweils eine Hardwareschnittstelle 13 mit einem gemeinsamen Datenbus 12 verbunden sind. Die Daten der Hardwareschnittstellen 13 werden durch Software-Schnittstellen 18.1 bis 18.5 in Eingabeparameter für die der jeweiligen Software-Schnittstelle 18.1 bis 18.5 zugeordnete Funktion 16.1 bis 16.5 umgewandelt. Die Ausgabeparameter der entsprechenden Funktion 16.1 bis 16.5 werden durch die der jeweiligen Funktion 16.1 bis 16.5 zugeordnete Software-Schnittstelle 18.1 bis 18.5 in Daten für die anderen Software-Schnittstellen 18.1 bis 18.5 und/oder der Hardware-Schnittstellen 13 umgewandelt. Die dargestellte Aufteilung der Funktionen 16.1 bis 16.5 auf die Geräteeinheiten 17.1 bis 17.3 ist als Beispiel zu sehen. Es ist auch vorstellbar, daß alle Funktionen 16.1 bis 16.4 der Applikation 15 innerhalb einer einzigen der dargestellten Geräteeinheiten 17.1 bis 17.3 durchgeführt wird, genauso sind beliebige andere Aufteilungsvarianten der Funktionen 16.1 bis 16.5 auf die Geräteeinheiten 17.1 bis 17.3 vorstellbar. Weitere denkbare Applikationen sind beispielsweise alle PC-Applikationen wie. Textverarbeitung, Terminkalender, Notizbuch, Fahrtenbuch, Spiele, Adreßbuch, Zielführung, sowie Dienste über externe Zentralen wie dynamische Zielführung, Auskunftsdienste, Informationsdienste usw..

## Patentansprüche

1. Fahrzeugkommunikationssystem, insbesondere für ein Kraftfahrzeug, mit mehreren Geräteeinheiten zum Senden, Empfangen, Erfassen und/oder Verarbeiten von Daten zum Ausführen von Applikationen, wobei die Geräteeinheiten mittels zugehörigen Hardwareschnittstellen mit einem gemeinsamen Datenbus verbunden sind,
wobei den Applikationen flexibel steuerbare Funktionen (16.1 bis 16.5) zugeordnet werden, wobei jeder Funktion jeweils eine Softwareschnittstelle (18.1 bis 18.5) zum Datenaustausch mit anderen Softwareschnittstellen (18.1 bis 18.5) und/oder Hardwareschnittstellen (13) zugeordnet ist, und wobei die Funktionen (16.1 bis 16.5) innerhalb beliebiger Geräteeinheiten (17.1 bis 17.3) ausgeführt werden,
**dadurch gekennzeichnet ,**
**dass** die ausführbaren Funktionen (16.1 bis 16.5) softwaremäßig realisiert werden und eine spezielle Applikation vorgesehen ist, welche Funktionen aufweist, die außerhalb des Fahrzeugs ausgeführt werden.

2. Fahrzeugkommunikationssystem nach Anspruch 1,
**dadurch gekennzeichnet ,**
**daß** die der Funktion (16.1 bis 16.5) zugeordnete Software-Schnittstelle (18.1 bis 18.5) Daten von den anderen Software-Schnittstellen (18.1 bis 18.5) und/oder der Hardware-Schnittstelle (13) in Eingabeparameter für die Funktion (16.1 bis 16.5) und/oder Ausgabepärameter der Funktion (16.1 bis 16.5) in Daten für die anderen Software-Schnittstellen (18.1 bis 18.5) und/oder die Hardware-Schnittstelle (13) umwandelt.

3. Fahrzeugkommunikationssystem nach Anspruch 1,
**dadurch gekennzeichnet ,**
**daß** innerhalb einer Geräteeinheit (17.1 bis 17.3) mehrere Software-Schnittstellen (18.1 bis 18.5) vorsehbar sind, wobei die Anzahl der Software-Schnittstellen (18.1 bis 18.5) von der Anzahl der innerhalb der Geräteeinheit (17.1 bis 17.3) ausführbaren Funktionen (16.1 bis 16.5) abhängig ist.

4. Fahrzeugkommunikationssystem nach Anspruch 1,
**dadurch gekennzeichnet ,**
**daß** eine bestimmte Funktion (16.1 bis 16.5) mehrmals innerhalb einer bestimmten Geräteeinheit (17.1 bis 17.3) und/oder innerhalb verschiedener Geräteeinheiten (17.1 bis 17.3) vorsehbar ist.

5. Fahrzeugkommunikationssystem nach Anspruch 2,
**dadurch gekennzeichnet,**
**daß** alle Eingabeparameter und/oder Ausgabeparameter der Funktionen (16.1 bis 16.5) und die von den Hardware-Schnittstellen (13) gelieferten und/oder benötigten Daten bekannt sind.

## Claims

1. Vehicle communications system, in particular for a motor vehicle, having a plurality of equipment units for transmitting, receiving, acquiring and/or processing data for executing applications, the equipment units being connected to a common data bus by means of associated hardware interfaces, the applications being assigned flexibly controllable functions (16.1 to 16.5), each function being respectively assigned a software interface (18.1 to 18.5) for exchanging data with other software interfaces (18.1 to 18.5) and/or hardware interfaces (13), and the functions (16.1 to 16.5) being executed within any desired equipment units (17.1 to 17.3), **characterized in that** the executable functions (16.1 to 16.5) are realized in terms of software and a special application is provided which has functions that are executed outside the vehicle.

2. Vehicle communications system according to Claim 1, **characterized in that** the software interface (18.1 to 18.5) assigned to the function (16.1 to 16.5) converts data from the other software interfaces (18.1 to 18.5) and/or the hardware interface (13) into input parameters for the function (16.1 to 16.5) and/or output parameters of the function (16.1 to 16.5) into data for the other software interfaces (18.1 to 18.5) and/or the hardware interface (13).

3. Vehicle communications system according to Claim 1, **characterized in that** a plurality of software interfaces (18.1 to 18.5) can be provided within an equipment unit (17.1 to 17.3), the number of software interfaces (18.1 to 18.5) being dependent on the number of functions (16.1 to 16.5) that can be executed within the equipment unit (17.1 to 17.3).

4. Vehicle communications system according to Claim 1, **characterized in that** a specific function (16.1 to 16.5) can be provided a number of times within a specific equipment unit (17.1 to 17.3) and/or within different equipment units (17.1 to 17.3).

5. Vehicle communications system according to Claim 2, **characterized in that** all the input parameters and/or output parameters of the functions (16.1 to 16.5) and the data supplied and/or required by the hardware interfaces (13) are known.

## Revendications

1. Système de communication pour véhicule, notamment pour un véhicule automobile, comprenant plusieurs unités d'appareillage pour émettre, recevoir, acquérir et/ou traiter des données destinées à exécuter des applications, les unités d'appareillage étant reliées avec un bus de données commun au moyen d'interfaces physiques correspondantes, des fonctions (16.1 à 16.5) à commande flexible étant associées aux applications, une interface logicielle (18.1 à 18.5) destinée à échanger des données avec d'autres interfaces logicielles (18.1 à 18.5) et/ou des interfaces physiques (13) étant à chaque fois associée à chaque fonction, et les fonctions (16.1 à 16.5) étant exécutées à l'intérieur d'unités d'appareillage (17.1 à 17.3) quelconques, **caractérisé en ce que** les fonctions exécutables (16.1 à 16.5) sont réalisées sous forme logicielle et il est prévu une application spéciale qui présente des fonctions qui sont exécutées à l'extérieur du véhicule.

2. Système de communication pour véhicule selon la revendication 1, **caractérisé en ce que** l'interface logicielle (18.1 à 18.5) associée à la fonction (16.1 à 16.5) convertit des données des autres interfaces logicielles (18.1 à 18.5) et/ou de l'interface physique (13) en paramètres d'entrée pour la fonction (16.1 à 16.5) et/ou les paramètres de sortie de la fonction (16.1 à 16.5) en données pour les autres interfaces logicielles (18.1 à 18.5) et/ou de l'interface physique (13) .

3. Système de communication pour véhicule selon la revendication 1, **caractérisé en ce que** plusieurs interfaces logicielles (18.1 à 18.5) peuvent être prévues à l'intérieur d'une unité d'appareillage (17.1 à 17.3), le nombre d'interfaces logicielles (18.1 à 18.5) dépendant du nombre de fonctions (16.1 à 16.5) pouvant être exécutées à l'intérieur de l'unité d'appareillage (17.1 à 17.3).

4. Système de communication pour véhicule selon la revendication 1, **caractérisé en ce qu'**une fonction (16.1 à 16.5) donnée peut être prévue plusieurs fois à l'intérieur d'une unité d'appareillage (17.1 à 17.3) donnée et/ou à l'intérieur de différentes unités d'appareillage (17.1 à 17.3).

5. Système de communication pour véhicule selon la revendication 2, **caractérisé en ce que** tous les paramètres d'entrée et/ou paramètres de sortie des fonctions (16.1 à 16.5) ainsi que les données délivrées et/ou requises par les interfaces physiques (13) sont connus.
